# EUROPEAN PATENT SPECIFICATION

(11) **EP 2 792 196 B1**
(45) Date of publication and mention of the grant of the patent: **24.07.2019**
(21) Application number: 12846849.3
(22) Date of filing: 14.09.2012
(51) Int. Cl.: H04W 48/18, H04W 40/04, H04W 88/06

(54) **MOBILE COMMUNICATION TERMINAL, COMMUNICATION METHOD, COMMUNICATION SYSTEM, AND CONTROL APPARATUS**
MOBILES KOMMUNIKATIONSENDGERÄT, KOMMUNIKATIONSVERFAHREN, KOMMUNIKATIONSSYSTEM UND STEUERPROGRAMM
TERMINAL DE COMMUNICATION MOBILE, PROCÉDÉ DE COMMUNICATION, SYSTÈME DE COMMUNICATION ET APPAREIL DE CONTRÔLE

(30) Priority: 09.11.2011 JP 2011245299
(43) Date of publication of application: 22.10.2014
(73) Proprietor: NEC Corporation, Tokyo 108-8001 (JP)
(72) Inventor: AKIYOSHI, Ippei, Tokyo 108-8001 (JP); MIZUKOSHI, Yasuhiro, Tokyo 108-8001 (JP); ITOH, Nobuhiko, Tokyo 108-8001 (JP)
(74) Representative: Robson, Aidan John
(86) International application number: PCT/JP2012/005918
(87) International publication number: WO 2013/069190

(56) References cited:
- WO-A1-2007/001215
- WO-A1-2010/080966
- WO-A2-2010/051054
- US-A1- 2004 218 605
- US-A1- 2008 305 825
- US-A1- 2011 261 722
- NICK MCKEOWN ET AL.: 'OpenFlow: Enabling Innovation in Campus Networks' ACM SIGCOMM COMPUTER COMMUNICATION REVIEW vol. 38, no. 2, April 2008, XP055002028

## Description

### TECHNICAL FIELD

The present invention relates to a mobile communication terminal, a communication method, a communication system, and a control apparatus, and more particularly to communication technology in which a control apparatus controls packet processing of a mobile communication terminal.

### BACKGROUND OF THE INVENTION

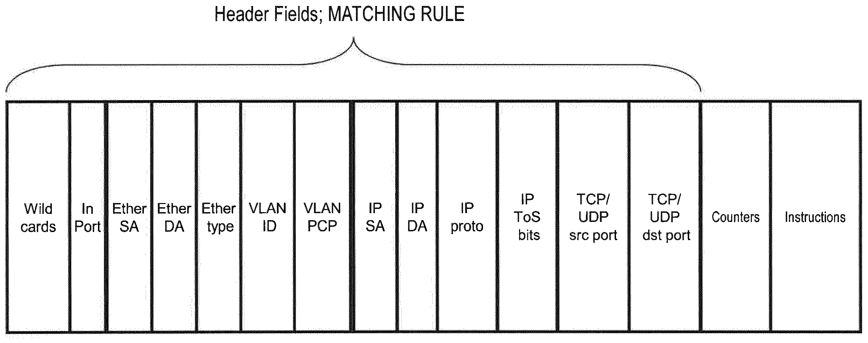

Recently, centrally controlled network architecture has been proposed. Technology known as OpenFlow exists as an example of centrally controlled network architecture (PCT International Publication No. 2008/095010 and Nick McKeown and seven other authors, "OpenFlow: Enabling Innovation in Campus Networks," [online], [search conducted on November 9, 2011], the Internet: URL:http://www.openflowswitch.org//documents/openflow-wp-latest.pdf and "Openflow Switch Specification, Version 1.1.0 Implemented (Wire Protocol 0x02)," February 28, 2011, [online], [search conducted on November 9, 2011], the Internet: <URL: http://www.openflowswitch.org/documents/openflow-spec-v1.1.0.pdf>). In OpenFlow communication is taken as end-to-end flows, and path control, failure recovery, load balancing, and optimization are performed on a per-flow basis. An OpenFlow switch as specified in the Openflow Switch Specification has a secure channel for communication with an OpenFlow controller positioned as a control apparatus, and operates according to a flow table to which information is added and whose contents are rewritten according to an instruction from the OpenFlow controller, as necessary. In the flow table, a set of the following is defined for each flow: a matching rule (Header fields) against which a packet header is matched, flow statistical information (Counters), and actions (Actions) that define processing content (see FIG. 17).

For example, when a packet is received, the OpenFlow switch searches the flow table for an entry that has a matching rule (refer to the header fields in FIG. 17) that matches header information of the received packet. If an entry matching the received packet is found as a result of the search, the OpenFlow switch updates the flow statistical information (Counter) and also implements processing content (packet transmission from a specified port, flooding, dropping, and the like) described in an Actions field of the entry in question, for the received packet. On the other hand, if an entry matching the received packet is not found as a result of the search, the OpenFlow switch forwards the received packet to the OpenFlow controller via a secure channel, requests determination of a path of the packet based on transmission source and destination of the received packet, receives a flow entry realizing this, and updates the flow table. In this way, the OpenFlow switch uses the entry stored in the flow table as a processing rule to perform packet forwarding.

With regard to the abovementioned related technology, in centrally controlled network architecture, an object controlled by a controller (control apparatus) is a switch or a router only, and there is no disclosure whatsoever of controlling a mobile communication terminal.

Furthermore, in a case where a mobile communication terminal communicates by Multi RAT (Radio Access Technology), the controller cannot comprehend characteristics or status of different access schemes for respective RATs possessed by the mobile communication terminals.

Accordingly, there is a need for a control apparatus to control a mobile communication terminal, giving consideration to characteristics or status of access schemes corresponding to respective RATs possessed by the mobile communication terminals. We have appreciated that it would be desirable to provide a mobile communication terminal, a communication method, a communication system, and a control apparatus, which solve the problem in question.

US 2004/0218605 discloses a method for selecting access for terminals in IP-based multi-access communication systems. US 2008/0305825 discloses a method and apparatus for providing capability information and core network information to support interworking between a third generation partnership project (3GPP) network and a non-3GPP network.

### SUMMARY OF INVENTION

According to a first aspect of the present disclosure, there is provided a mobile communication terminal (1) arranged to communicate with a network (4) including a control apparatus (2) and a plurality of packet forwarding apparatuses (3) wherein the control apparatus (2) is arranged to centrally control packet forwarding performed by the plurality of packet forwarding apparatuses, the mobile communication terminal comprising: a plurality of communication interfaces (10, 105) for wireless communication, each of the communication interfaces corresponding to one of a plurality of radio access networks through which the mobile communication terminal communicates with the network (4); a packet forwarding apparatus configured to: transmit to the control apparatus (2) interface information that is information related to characteristics or status of the plurality of communication interfaces when no processing rule corresponding to a packet to be processed exists, transmit to the control apparatus (2) a request for a processing rule for for said packet, and receive, from the control apparatus (2), a processing rule, wherein the processing rule includes an instruction indicating the interface (10) the terminal should forward the packet to; and forward the packet to the interface (10) in accordance with an instruction from the control apparatus (2).

According to a second aspect of the present disclosure there is provided a communication method by a mobile communication terminal (1) that communicates with a network (4) including a control apparatus (2) and a pluarailty of packet forwarding apparatuses (3) wherein the control apparatus (2) centrally controls packet forwarding performed by the plurality of packet forwarding apparatuses, the mobile communication terminal including a plurality of communication interfaces (10,105) for wireless communication, each of the communication interfaces corresponding to one of a plurality of radio access networks through which the mobile communication terminal communicates with the network (4), the method comprising: transmitting to the control apparatus (2) interface information that is information related to the plurality of communication interfaces, when no processing rule corresponding to a packet to be processed exists, transmitting to the control apparatus (2) a request for a processing rule for for said packet, and receiving, from the control apparatus (2), a processing rule, wherein the processing rule includes an instruction indicating the interface (10) the terminal should forward the packet to; and forwarding the packet to the interface (10) in accordance with an instruction from the control apparatus.

Other aspects of the present invention provide a system according to claim 15 and a program according to claim 16.

### BRIEF DESCRIPTION OF DRAWINGS

FIG. 1 is a diagram showing an example of a connection configuration of a communication system according to the present disclosure.
FIG. 2 is a block diagram showing an example of a configuration of a mobile communication terminal according to the present disclosure.
FIG. 3 is a block diagram showing an example of a configuration of a mobile communication terminal of a communication system according to a first exemplary embodiment.
FIG. 4 is a block diagram showing an example of a configuration of a packet forwarding function unit in the mobile communication terminal of the communication system according to the first exemplary embodiment.
FIG. 5 is a table showing an example of an instruction notified to the mobile communication terminal by a control apparatus in the communication system according to the first exemplary embodiment.
FIG. 6 is a table showing an example of an access scheme managed by the mobile communication terminal in the communication system according to the first exemplary embodiment.
FIG. 7 is a block diagram showing an example of a configuration of the control apparatus in the communication system according to a first exemplary embodiment.
FIG. 8 is a table showing an example of an access scheme possessed by the mobile communication terminal and managed by the control apparatus, in the communication system according to the first exemplary embodiment.
FIG. 9 is a table showing an example of a control policy (access network selection policy) of the mobile communication terminal in the communication system according to the first exemplary embodiment.
FIG. 10 is a sequence diagram showing an example of an operation of the communication system according to the first exemplary embodiment.
FIG. 11 is a diagram showing an example of a connection configuration of a communication system according to a second exemplary embodiment.
FIG. 12 is a table showing an example of an access scheme managed by a mobile communication terminal in the communication system according to the second exemplary embodiment.
FIG. 13 is a table showing an example of a control policy (access network selection policy) of the mobile communication terminal in the communication system according to the second exemplary embodiment.
FIG. 14 is a sequence diagram showing an example of an operation of the communication system according to the second exemplary embodiment.
FIG. 15 is a table showing an example of an access scheme possessed by the mobile communication terminal and managed by the control apparatus, in the communication system according to the second exemplary embodiment.
FIG. 16 is a table showing an example of an access scheme possessed by the mobile communication terminal and managed by the control apparatus, in the communication system according to the second exemplary embodiment.
FIG. 17 is a diagram showing an example of a flow table in related technology.

### DETAILED DESCRIPTION OF EXAMPLE EMBODIMENTS

First, a description is given of an overview of the present disclosure.

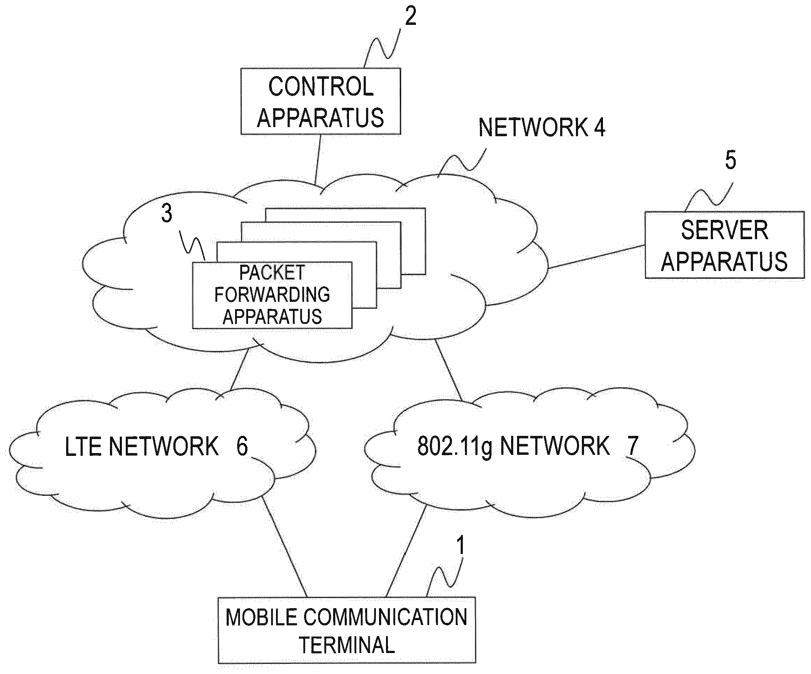

FIG. 1 is a diagram showing an example of a connection configuration of a communication system according to the present disclosure. The system configuration of FIG. 1 is an example, and the present disclosure is not limited to the system configuration described in FIG. 1.

A mobile communication terminal 1 supports a plurality of types of RAT (Radio Access Technology), and communicates via RANs (Radio Access Network) corresponding to respective RATs. A RAN is, for example, an LTE (Long Term Evolution) network 6 or an 802.11g network 7. The mobile communication terminal 1 is a device that has a communication function, such as a mobile telephone, a personal computer, a mobile router, or the like. The mobile communication terminal 1 communicates with a network 4 via a RAN, for example. The mobile communication terminal 1 communicates with a server apparatus 5 via the network 4, for example.

The network 4 includes a control apparatus 2 and a plurality of packet forwarding apparatuses 3, for example. The control apparatus 2 centrally controls packet forwarding by the packet forwarding apparatus 3. The control apparatus 2, for example, determines a packet processing method in response to a request from the packet forwarding apparatus 3, and instructs the determined processing method to the packet forwarding apparatus 3. The control apparatus 2, for example, instructs a processing method corresponding to a forwarding path to the server apparatus 5, to the packet forwarding apparatus 3. The packet forwarding apparatus 3 processes the received packet in accordance with the instruction from the control apparatus 2.

It is to be noted that the network 4 may include a communication device outside of the packet forwarding apparatus 3 that forwards packets in accordance with the control apparatus 2. For example, the network 4 may include a communication device that operates based on a distributed protocol such as RIP (Routing Information Protocol) or OSPF (Open Shortest Path First).

The mobile communication terminal 1, for example, communicates with the server apparatus 5 via the packet forwarding apparatus 3 that operates in accordance with an instruction from the control apparatus 2.

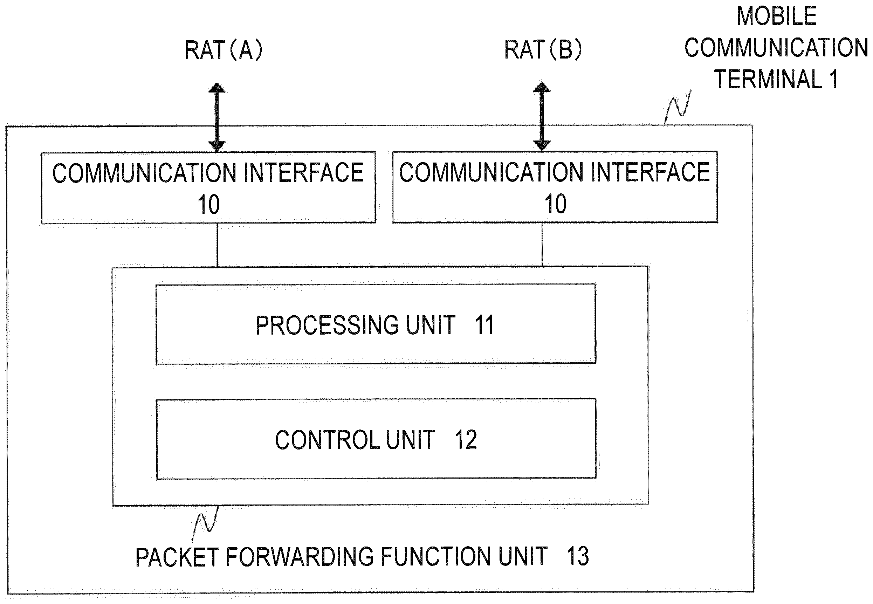

FIG. 2 is a block diagram showing an example of a configuration of the mobile communication terminal 1. The configuration of FIG. 2 is an example, and the mobile communication terminal 1 of the present invention is not limited to the configuration described in FIG. 2.

The mobile communication terminal 1 comprises a plurality of types of communication interface 10. Two communication interfaces 10 are shown in FIG. 2, but the number of communication interfaces is not limited to two. The mobile communication terminal 1 communicates with a corresponding RAN via a communication interface 10. For example, the mobile communication terminal 1 communicates with an LTE 6 via a communication interface 10 corresponding to the LTE 6.

A packet forwarding function unit 13 executes packet forwarding and the like, in accordance with an instruction from the control apparatus 2 of the network 4. The packet forwarding function unit 13 may, for example, be a virtual switch built in software. The packet forwarding function unit 13 includes a processing unit 11 and a control unit 12.

The control unit 12 controls communication with the control apparatus 2. The control unit 12, for example, establishes a control channel with the control apparatus 2, in order for the packet forwarding function unit 13 to receive an instruction from the control apparatus 2. The control unit 12, for example, requests an instruction with respect to the control apparatus 2, via the established control channel.

The processing unit 11 processes packets in accordance with an instruction received by the control unit 12 from the control apparatus 2. The processing unit 11, for example, forwards packets to one of the communication interfaces 10. In addition, the processing unit 11, for example, forwards a packet received via any of the communication interfaces 10 to a prescribed application operated by the mobile communication terminal 1.

The control unit 12 transmits information related to the respective communication interfaces 10 to the network 4, in order to give notification to the control apparatus 2. Information related to the communication interfaces 10 may be, for example, an access scheme supported by the communication interfaces 10, an access scheme used by the communication interfaces 10, communication status of the communication interfaces 10, or the like. The control unit 12 transmits information related to the communication interfaces 10, for example, to the control apparatus 2, via the packet forwarding apparatus 3.

Since the mobile communication terminal 1 transmits information related to the communication interfaces 10, the control apparatus 2 can give an instruction to the mobile communication terminal 1, giving consideration to this information. The control apparatus 2, for example, can control packet processing of the mobile communication terminal 1, giving consideration to attributes of packets communicated by the mobile communication terminal 1 and characteristics of the communication interfaces 10. For example, if the mobile communication terminal 1 performs video streaming, since with an 802.11g network 7 the number of connections of the mobile communication terminal per access apparatus, such as a base station, is few in comparison to an LTE network 6, giving consideration to the fact that the probability is high of there being many bands useable by the mobile communication terminal 1, the control apparatus 2 sends an instruction to the control unit 12 so that the mobile communication terminal 1 uses a communication interface 10 corresponding to the 802.11g network 7. In addition, when the mobile communication terminal 1 performs VoIP (Voice over IP) for example, giving consideration to the fact that with the LTE network 6 there is little delay and cover area is large in comparison to the 802.11g network 7, the control apparatus 2 sends an instruction to the control unit 12 so that the mobile communication terminal 1 uses a communication interface 10 corresponding to the LTE network 6.

As described above, according to the present disclosure, the control apparatus 2 can control the mobile communication terminal 1, giving consideration to characteristics or status of the mobile communication terminal 1 corresponding to respective RATs.

### (First Exemplary Embodiment)

A description is given concerning a communication system related to a first exemplary embodiment, making reference to the drawings.

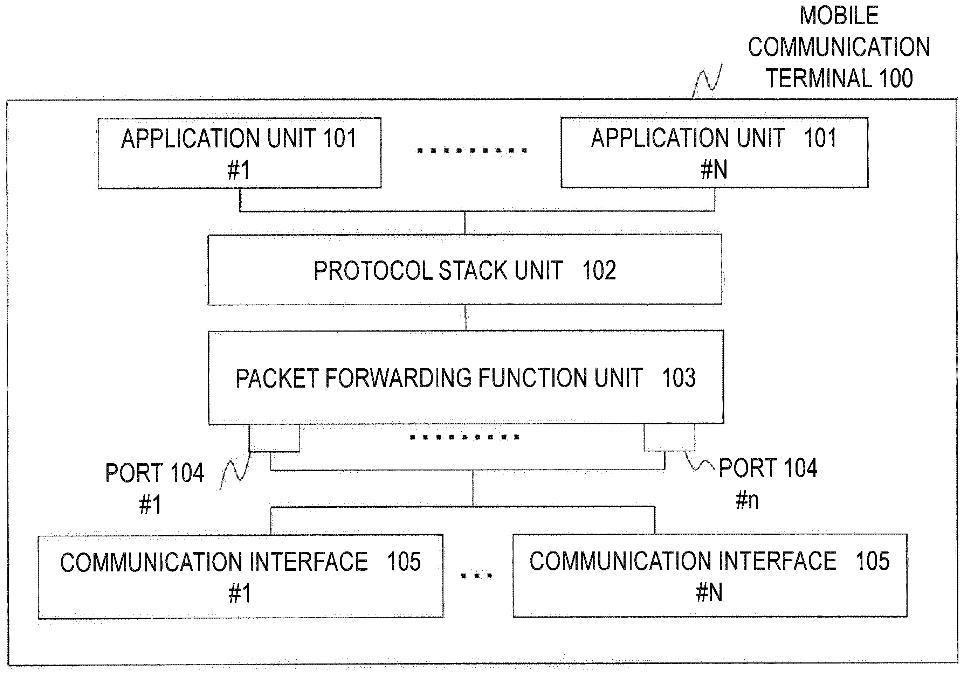

FIG. 3 is a block diagram showing an example of a configuration of the mobile communication terminal 100 in the present exemplary embodiment. The configuration described in FIG. 3 is an example, and the configuration of the mobile communication terminal 100 is not limited to the configuration described in FIG. 3. It is to be noted that the mobile communication terminal 100 belongs to the communication system described in FIG. 1. The mobile communication terminal 100 is an apparatus that has a communication function, such as a mobile telephone, a personal computer, a mobile router, or the like.

A packet forwarding function unit 103 comprises a plurality of port units 104. In the example of FIG. 3, the packet forwarding function unit 103 has n port units 104 (n is an integer). Respective communication interfaces 105, for example, are connected to at least one of the plurality of port units 104.

The mobile communication terminal 100 transmits information related to a communication interface 105 that is connected to at least one of the plurality of port units 104, to a network 4, in order to give notification to a control apparatus 2. A detailed description is given below, making reference to the drawings.

FIG. 3 shows an example of a configuration of the mobile communication terminal 100. Referring to FIG. 3, the mobile communication terminal comprises: N application units 101, a protocol stack unit 102, the packet forwarding function unit 103, the n port units 104, and the N communication interfaces 105.

In the mobile communication terminal 100, a plurality of applications (application units 101 #1 to #N) are operating. The applications communicate with the network 4 via an LTE network 6 or an 802.11g network 7.

When an application transmits communication data to the network 4, the communication data is processed by the protocol stack unit 102 (for example, a protocol stack such as an OSI reference model), and formed into a packet to which a prescribed protocol header or the like is given. The packet is transmitted from the communication interface 105 via the packet forwarding function unit 103.

The packet forwarding function unit 103 forwards the packet from the port unit 104, in accordance with an instruction from the control apparatus 2. The packet forwarded from the port unit 104 is transmitted to the LTE network 6 or the 802.11g network 7 via any of the communication interfaces 105. The packet received by the communication interface 105 from the LTE network 6 or the 802.11g network 7 is sent to an application via the packet forwarding function unit 103.

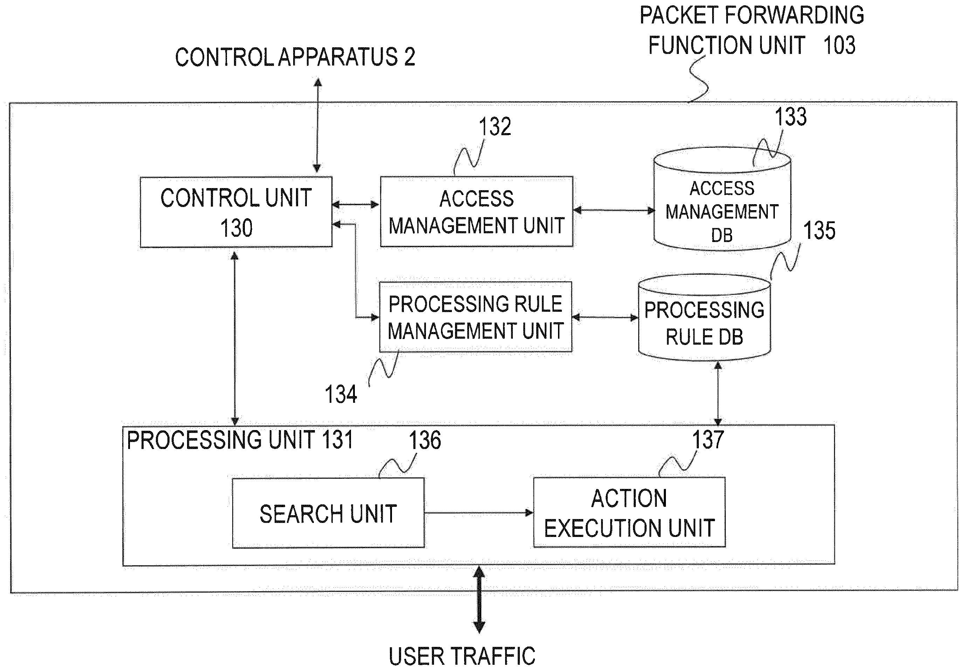

FIG. 4 is a block diagram showing an example of a configuration of the packet forwarding function unit 103. Referring to FIG. 4, the packet forwarding function unit 103 comprises a control unit 130, a processing unit 131, an access management unit 132, an access management DB 133, a processing rule management unit 134, and a processing rule database (DB) 135.

The control unit 130 controls communication with the control apparatus 2. The control unit 130, for example, establishes a control channel with the control apparatus 2, in order for the packet forwarding function unit 103 to receive an instruction from the control apparatus 2. The control unit 130, for example, requests an instruction with respect to the control apparatus 2, via the established control channel.

The control unit 130 passes the instruction received from the control apparatus 2 to the processing rule management unit 134. The processing rule management unit 134 passes the instruction received from the control apparatus 2 to the processing rule DB 135.

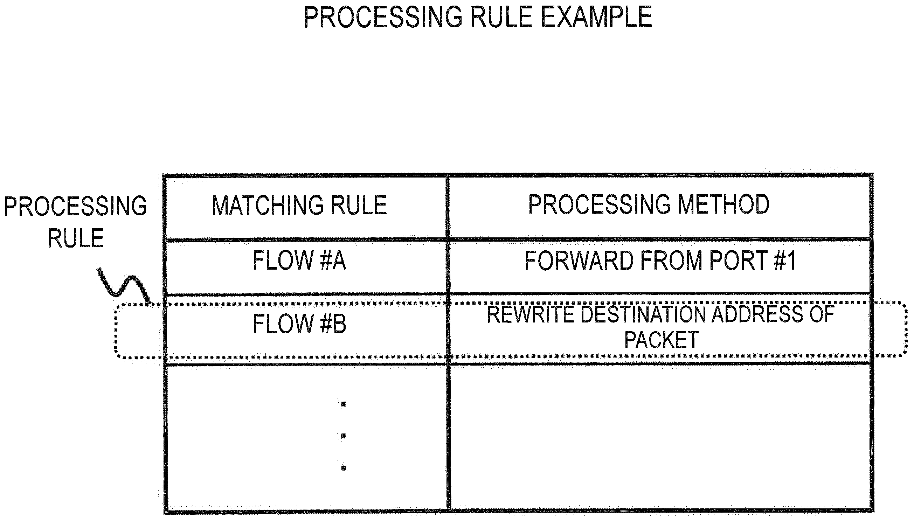

FIG. 5 shows a configuration example of an instruction received from the control apparatus 2. The control apparatus 2, for example, transmits a matching rule that is a condition for distinguishing a flow to which a packet belongs, and a processing rule configured by a method of processing the packet belonging to the flow matching the matching rule, to the control unit 130. That is, the control apparatus 2 transmits the processing rule as an instruction to the control unit 130. The processing rule DB 135 stores the processing rule received from the control apparatus 2.

FIG. 5 shows "flow #A" and "flow #B" as examples of matching rules. "Flow" indicates a sequence of packet groups identified by prescribed information such as packet destination address or transmission source address, or a combination of such information. For example, a condition of "a packet whose packet transmission destination address is 'A,' and whose packet transmission source is 'a"' is defined as a matching rule in "flow #A." As a further example, a condition of "a packet provided with a port number corresponding to http/https protocol (that is, a packet for Web access)" is defined as a matching rule. A packet conforming with the matching rule is processed by a processing method corresponding to that matching rule.

The processing unit 11 executes processing such as packet forwarding, rewriting of packet header unit, or the like, in accordance with an instruction of the control apparatus 2. A search unit 136 retrieves a processing rule conforming with a packet, among processing rules stored in the processing rule DB 135. The search unit 136, for example, compares packet content and matching rule, retrieves a processing rule including a matching rule that matches the packet content. In a case where a processing rule conforming with a packet is not stored in the processing rule DB 135, for example, the search unit 136 gives notification to the control unit 130, and the control unit 130 requests a processing rule with respect to the control apparatus 2.

An action execution unit 137 processes a packet in accordance with a processing method defined by the processing rule retrieved by the search unit 136. For example, the action execution unit 137 executes processing to forward a packet from a prescribed port unit 104, or processing to rewrite packet content, in accordance with the processing rule.

The access management unit 132 searches the access management DB 133, and gives notification of information related to the communication interface 105 to the control unit 130. The control unit 130 transmits the notified information to the network 4, in order to give notification to the control apparatus 2.

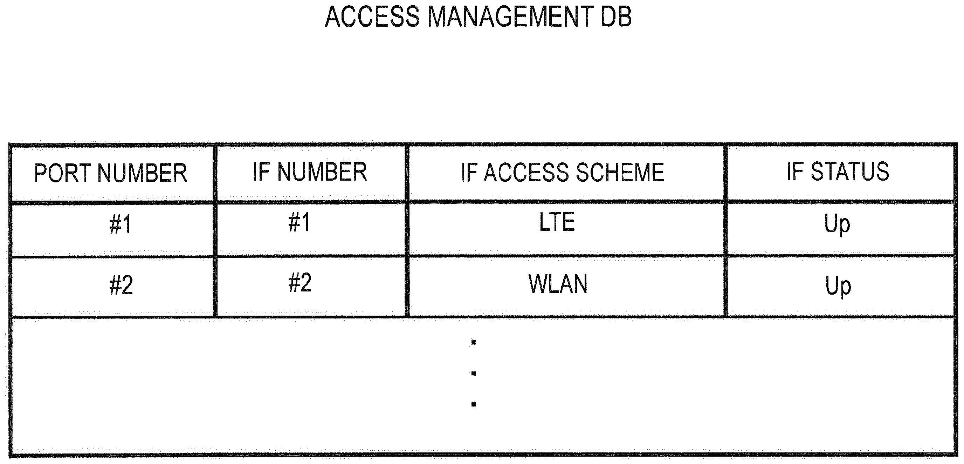

FIG. 6 is a table showing an example of a configuration of the access management DB 133. The configuration described in FIG. 6 is an example, and the configuration of the access management DB 133 is not limited to the configuration described in FIG. 6.

The access management DB 133 manages interaction between the respective port units 104 and the respective communication interfaces 105, and the status of interfaces thereof. The access management DB 133, for example, uses the number of a port unit 104 and the number of a communication interface 105, to manage interaction of the port unit 104 and the communication interface 105. For example, a port unit 104 having the number "#1" interacts with a communication interface 105 having the number "#1." The access management DB 133 also manages an access scheme supported by the communication interface 105. For example, FIG. 6 shows that the access scheme supported by the communication interface having the number "#1" is LTE.

In the present exemplary embodiment, specific communication standards such as LTE and 802.11g are described as supported access schemes, but management is also possible with a granularity including a plurality of communication standards. In this regard, for example, 3GPP access including UTRAN (UMTS Terrestrial Radio Access Network) or LTE, WLAN (Wireless Local Area Network) including 802.11g or 802.11n, and the like, are cited. It is to be noted that the supported access scheme is shown as an example, and the access management DB 133 may manage information outside of the supported access scheme as a characteristic of the communication interface.

The access management DB 133 also manages link status of the communication interface 105. For example, FIG. 6 shows that the communication interface having the number "#1" has an Up status, that is, a status where a connection relationship with the LTE network 6 is established.

The control unit 130, for example, gives notification of the access scheme supported by the communication interface 105, together with the port number of the port unit 104 corresponding to the relevant communication interface 105, to the control apparatus 2. Furthermore, the control unit 130, for example, gives notification of the status of the communication interface 105, as a port status of the port unit 104 corresponding to the relevant communication interface 105, to the control apparatus 2.

The mobile communication terminal 100 may be provided with a function to download a software module having a function equivalent to the packet forwarding function unit 103. The mobile communication terminal 100 may use the downloaded software module as the packet forwarding function unit 103.

It is to be noted that the packet forwarding apparatus 3 is provided with a configuration equivalent to the packet forwarding function unit 103, outside of the access management unit 132 and the access management DB 133.

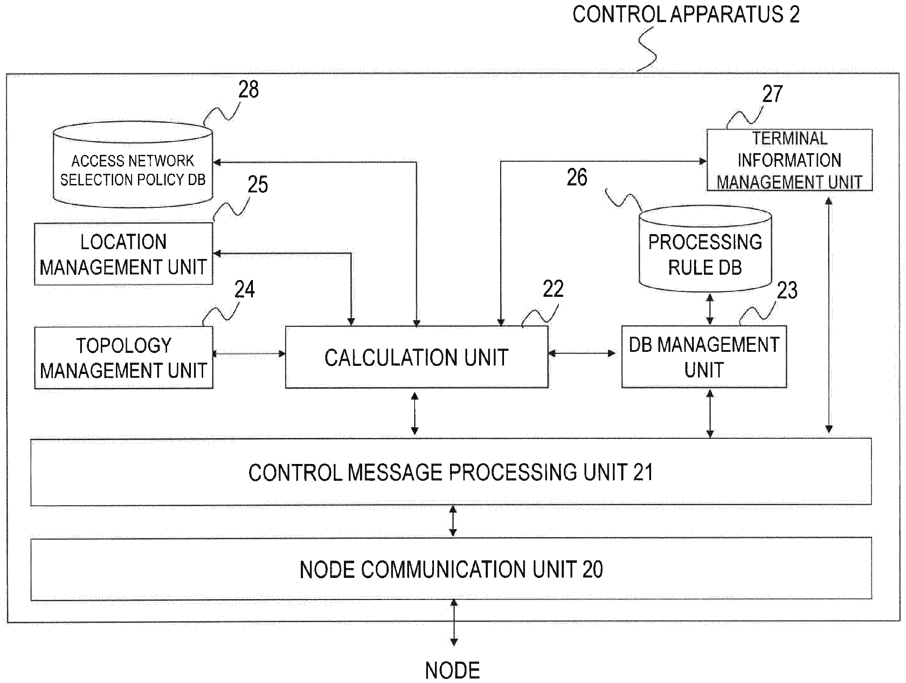

FIG. 7 is a block diagram showing an example of a configuration of the control apparatus 2. Referring to FIG. 7, the control apparatus 2 comprises a node communication unit 20, a control message processing unit 21, a calculation unit 22, a DB management unit 23, a topology management unit 24, a location management unit 25, a processing rule DB 26, a terminal information management unit 27, and an access network selection policy DB 28. It is to be noted that the configuration in FIG. 7 is an example, and the configuration of the control apparatus 2 is not limited to the configuration described in FIG. 7.

The processing rule DB 26 stores processing rules for setting in the mobile communication terminal 100 and the packet forwarding apparatus 3. It is to be noted that since details of the processing rules are described with reference to FIG. 5, they are omitted here.

The node communication unit 20 communicates with the mobile communication terminal 100 and the packet forwarding apparatus 3.

The topology management unit 24 manages network topology based on a connection relationship with the packet forwarding apparatus 3 collected via the node communication unit 20.

The calculation unit 22 determines a packet forwarding path based on the network topology and packet processing to be executed in the packet forwarding apparatus 3 in the forwarding path in question. That is, the calculation unit 22 calculates the packet forwarding path and determines a forwarding rule corresponding to this forwarding path.

The DB management unit 23 records the processing rule determined by the calculation unit 22 in the processing rule DB 26. The DB management unit 23 updates processing rules recorded in the processing rule DB 26, in response to notification of removal of a processing rule from the packet forwarding apparatus 3 or the mobile communication terminal 100.

The control message processing unit 21 analyzes a control message received from the packet forwarding apparatus 3 or the mobile communication terminal 100, and performs required processing. The control message processing unit 21 generates a message (for example, a message for setting a processing rule, or the like) to be transmitted to the packet forwarding apparatus 3 or the mobile communication terminal 100.

Since the control apparatus 2 is used in controlling the packet forwarding apparatus 3 or the mobile communication terminal 100, the control message processing unit 21 requests the features (number of ports, execution performance for prescribed packet processing, transmission rate for each port, and the like) of the packet forwarding apparatus 3 or the mobile communication terminal 100, with respect to the packet forwarding apparatus 3 or the mobile communication terminal 100. The packet forwarding apparatus 3 or the mobile communication terminal 100 use a feature reply with respect to the feature request, to respond with information of the number of ports for packet forwarding or the execution performance for prescribed packet processing. The mobile communication terminal 100 responds with information related to the communication interface, with regard to the feature request.

The location management unit 25 manages the location of the mobile communication terminal 100 in the network topology of the network 4. The location management unit 25, for example, manages the location of the mobile communication terminal 100, from the IP address of the mobile communication terminal 100 extracted from a RAN such as the LTE network 6 or the 802.11g network 7.

The terminal information management unit 27 manages information transmitted from the mobile communication terminal 100 or the packet forwarding apparatus 3. For example, the terminal information management unit 27 manages information (the number of ports of the packet forwarding apparatus 3, the execution performance for specific packet processing, or the like) related to performance for the packet forwarding apparatus 3, received from the packet forwarding apparatus 3. Furthermore, the terminal information management unit 27 manages information received from the mobile communication terminal 100. The terminal information management unit 27 manages the communication interface 105 of the mobile communication terminal 100 and the port number of the port unit 104 corresponding to the communication interface in question.

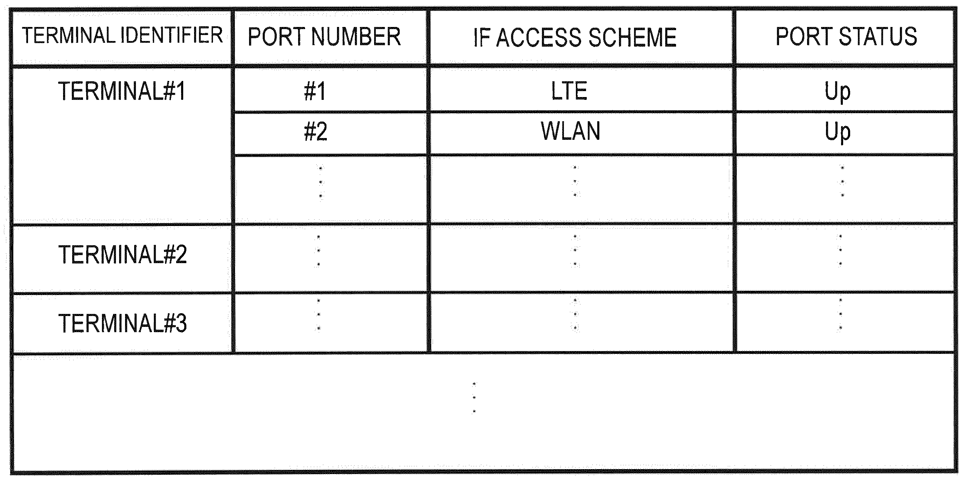

FIG. 8 shows an example of a table managed by the terminal information management unit 27 as information of the mobile communication terminal 100. It is to be noted that FIG. 8 is an example, and the configuration of the table is not limited to what is described in FIG. 8.

The terminal information management unit 27 manages information for each identifier of the mobile communication terminals 100. The terminal information management unit 27 manages access schemes supported by the respective port units 104 possessed by the respective mobile communication terminals 100, and port status thereof.

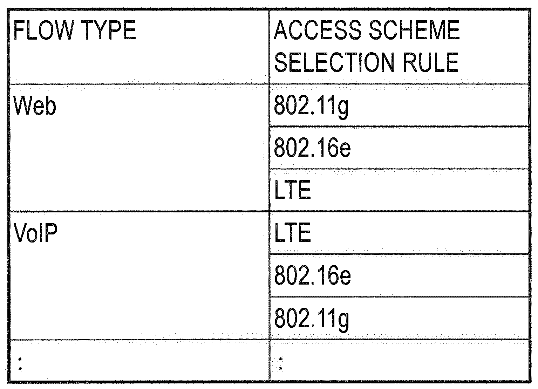

The access network selection policy DB 28 manages an access scheme to be used by the mobile communication terminal 100 (that is, the communication interface 105 to be used), for each type of packet flow. FIG. 9 shows an example of the access network selection policy DB 28. FIG. 9 is an example, and the configuration of the database is not limited to what is described in FIG. 9. In the present exemplary embodiment, a common applied policy was used for a plurality of mobile communication terminals, but this policy may be generated for mobile communication terminals individually.

The calculation unit 22 determines an access scheme to be used by the mobile communication terminal 100 (that is, the communication interface 105 to be used), for each type of packet flow, as an "access scheme selection rule." Making reference to the example of FIG. 9, for example, the calculation unit 22 generates a policy of "when the flow type is Web access, any of 802.11g, 802.16e, or LTE is selected as an access scheme." It is to be noted that the calculation unit 22 may attach priorities to the access schemes. Making reference to the example of FIG. 9, when the flow type is Web access, for example, the calculation unit 22 may attach priorities to the respective access scheme candidates (802.11g, 802.16e, or LTE). For example, when the flow type is Web access, the calculation unit 22 may set the priority of WLAN to be highest, and the priority of LTE to be lowest.

The calculation unit 22 may give consideration to RAN load status or the like, to determine the policy. For example, in a case where the RAN load for the LTE is high, the calculation unit 22 may determine the policy such that usage of an LTE access scheme is avoided as much as possible.

The calculation unit 22 refers to the access network selection policy DB 28 and generates a processing rule to be transmitted to the mobile communication terminal 100. For example, the calculation unit 22 generates a processing rule specifying that a packet belonging to a flow corresponding to Web access is forwarded from a port unit 104 corresponding to a communication interface 105 for 802.11g. The processing rule generated by the calculation unit 22 is stored in the processing rule DB 26. The processing rule generated by the calculation unit 22 is transmitted to the mobile communication terminal 100, via the node communication unit 20.

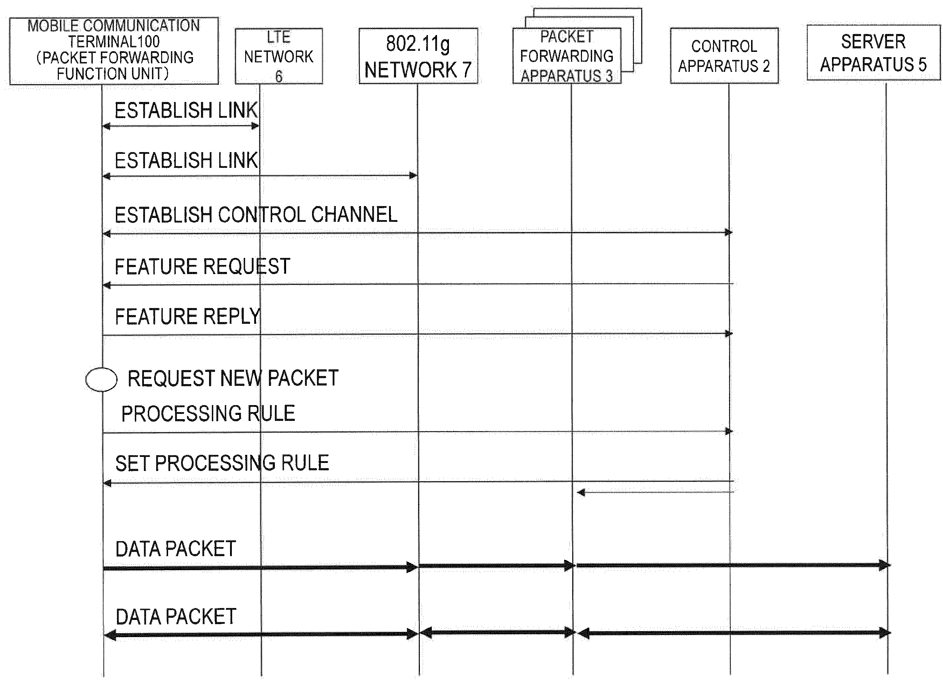

FIG. 10 is a sequence diagram showing an example of an operation of the communication system according to the present exemplary embodiment. Referring to FIG. 10, a description is given of an operation of the communication system of the present exemplary embodiment. It is to be noted that the operation shown in FIG. 10 are exemplary, and operations of the present disclosure are not limited to the operation shown in FIG. 10.

The mobile communication terminal 100, for example, establishes a link with the LTE network 6 and the 802.11g network 7.

The mobile communication terminal 100 establishes a control channel with the control apparatus 2, via the link established with the RAN. The control apparatus 2 transmits a feature request to the mobile communication terminal 100, via the control channel.

The mobile communication terminal 100 responds, as a feature reply to the feature request, with an access scheme supported by a communication interface corresponding to the port unit 104.

The packet forwarding function unit 103 of the mobile communication terminal 100, for example, receives a packet from an application. In a case where no processing rule corresponding to the packet in question exists (that is, when a new packet is received) the packet forwarding function unit 103 requests a processing rule with respect to the control apparatus 2. It is to be noted that in the example of FIG. 10, the new packet is a packet for communicating with a server apparatus 5.

The control apparatus 2, for example, gives consideration to the access scheme supported by the communication interface notified by the mobile communication terminal 100, and determines a processing rule to be transmitted to the mobile communication terminal 100. The control apparatus 2 transmits the determined processing rule to the mobile communication terminal 100. The control apparatus 2 determines a forwarding path for the mobile communication terminal 100 to communicate with the server apparatus 5, and transmits a processing rule corresponding to the determined path to the packet forwarding apparatus 3.

In accordance with the received processing rule, the mobile communication terminal 100 communicates with the server apparatus 5 via the packet forwarding apparatus 3.

### (Second Exemplary Embodiment)

A description is given concerning a communication system related to a second exemplary embodiment, making reference to the drawings.

In the first exemplary embodiment, since there is one access scheme supported by the communication interfaces 105, the mobile communication terminal 100 gives notification of the access scheme supported by the communication interfaces 105 to the control apparatus 2. In the present exemplary embodiment, since there are plural access schemes supported by the communication interfaces 105, the mobile communication terminal 100 gives notification of an access scheme actually used by the communication interfaces 105, to the control apparatus 2.

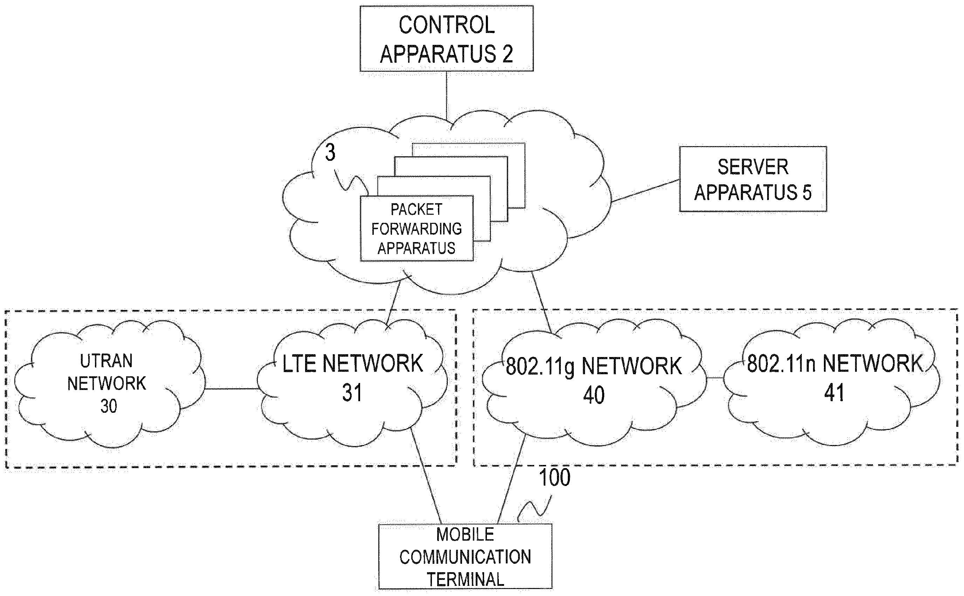

FIG. 11 is a diagram showing an example of a connection configuration of the communication system according to the present exemplary embodiment. It is to be noted that the configuration in FIG. 11 is an example, and the configuration of the communication system of the present invention is not limited to the configuration described in FIG. 11.

The mobile communication terminal 100, for example, comprises a communication interface for 3GPP access and a communication interface for WLAN. The communication interface for 3GPP access is connected, for example, to an UTRAN network 30 or an LTE network 31. The communication interface for WLAN is connected to a wireless network by an 802.11g network 40 or an 802.11n network 41.

The mobile communication terminal 100, for example, communicates with a server apparatus 5 via a 3GPP access network as in the UTRAN network 30 or the LTE network 31, or a WLAN network as in the 802.11g network 40 or the 802.11n network 41.

An access management unit 132 of the mobile communication terminal 100 gives notification of an access scheme used by a communication interface to the control apparatus 2 via a control unit 130. When the access scheme being used is changed (for example, when there is a change from UTRAN to LTE by a handover), the access management unit 132 gives notification to the control unit 130. The control unit 130 gives notification to the control apparatus 2 that the access scheme being used has changed.

The mobile communication terminal 100, for example, may give notification of, in addition to the access scheme being used, information of an operator managing the access network, a cell ID of a wireless base station to which the mobile communication terminal 100 is connected, an SSID, which is an identifier of a WLAN access point, or the like. The mobile communication terminal 100 may give notification of information related to quality of the communication interface to the control apparatus 2.

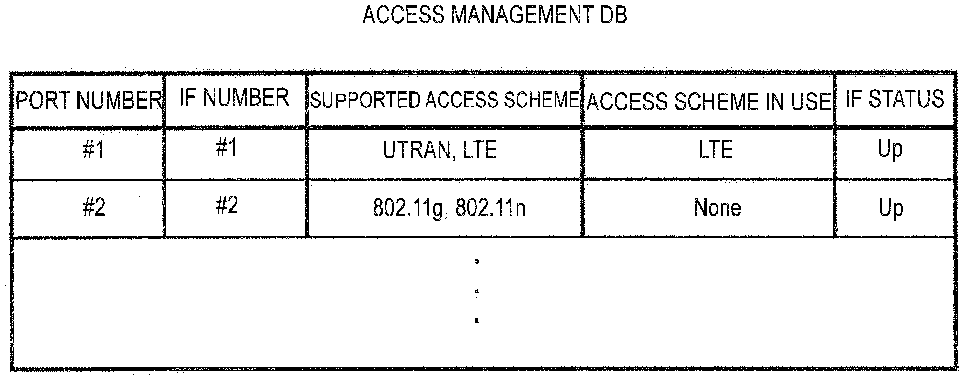

The access management unit 132 manages the access scheme supported by the communication interface and the access scheme being used by the communication interface, according to a table shown in FIG. 12. It is to be noted that the table in FIG. 12 is an example, and the table managed by the access management unit 132 is not limited to the table shown in FIG. 12. For example, in FIG. 12, the supported access scheme, such as LTE or UTRAN, is specifically described as a supported access scheme, but management is also possible with a granularity including a plurality of communication standards, such as 3GPP access, WLAN, and the like.

It is to be noted that since other configurations of the mobile communication terminal 100 are equivalent to content described with reference to FIG. 4, descriptions thereof are omitted.

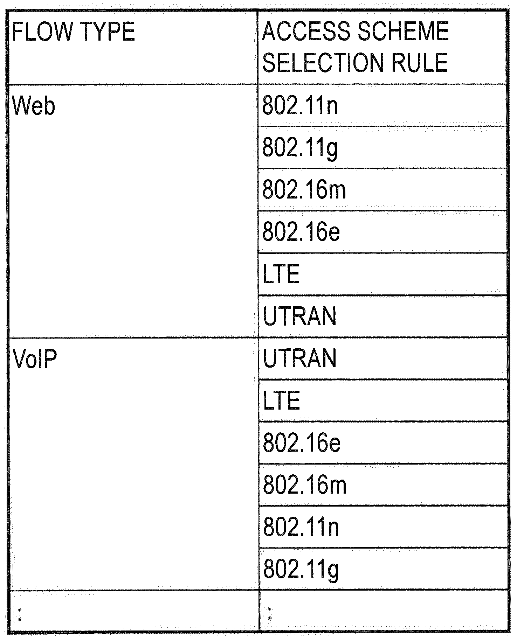

An access network selection policy DB 28 manages an access scheme to be used by the mobile communication terminal 100 (that is, the communication interface 105 to be used), for each type of packet flow. FIG. 13 is an example, and the configuration of the database is not limited to what is described in FIG. 13. In the present exemplary embodiment, a common applied policy was used for a plurality of mobile communication terminals, but this policy may be generated for mobile communication terminals individually.

A calculation unit 22 determines an access scheme to be used by the mobile communication terminal 100, for each type of packet flow, as an "access scheme selection rule." Referring to the example of FIG. 13, the calculation unit 22, for example, generates the policy: "when the flow type is Web access, the mobile communication terminal 100 selects any of 802.11n, 802.11g, 802.16m, 802.16e, LTE, and UTRAN," as the access scheme to be used. It is to be noted that the calculation unit 22 may attach priorities to the access schemes. Making reference to the example of FIG. 13, when the flow type is Web access, for example, the calculation unit 22 may attach priorities to the respective access scheme candidates (802.11n, 802.11g, 802.16m, 802.16e, LTE, and UTRAN). For example, when the flow type is Web access, the calculation unit 22 may set the priority of 802.11n to be highest, and the priority of UTRAN to be lowest.

The calculation unit 22 may give consideration to RAN load status or the like, to determine the policy. For example, in a case where the load of a 3GPP access RAN is high, the calculation unit 22 may determine the policy such that usage of an access scheme related to 3GPP access is avoided as much as possible.

The calculation 22 refers to the access network selection policy DB 28, and generates a processing rule to be transmitted to the mobile communication terminal 100. For example, the calculation unit 22 generates a processing rule specifying that a packet belonging to a flow corresponding to Web access is forwarded from a port unit 104 corresponding to 802.11n. The processing rule generated by the calculation unit 22 is stored in a processing rule DB 26. The processing rule generated by the calculation unit 22 is transmitted to the mobile communication terminal 100, via a node communication unit 20.

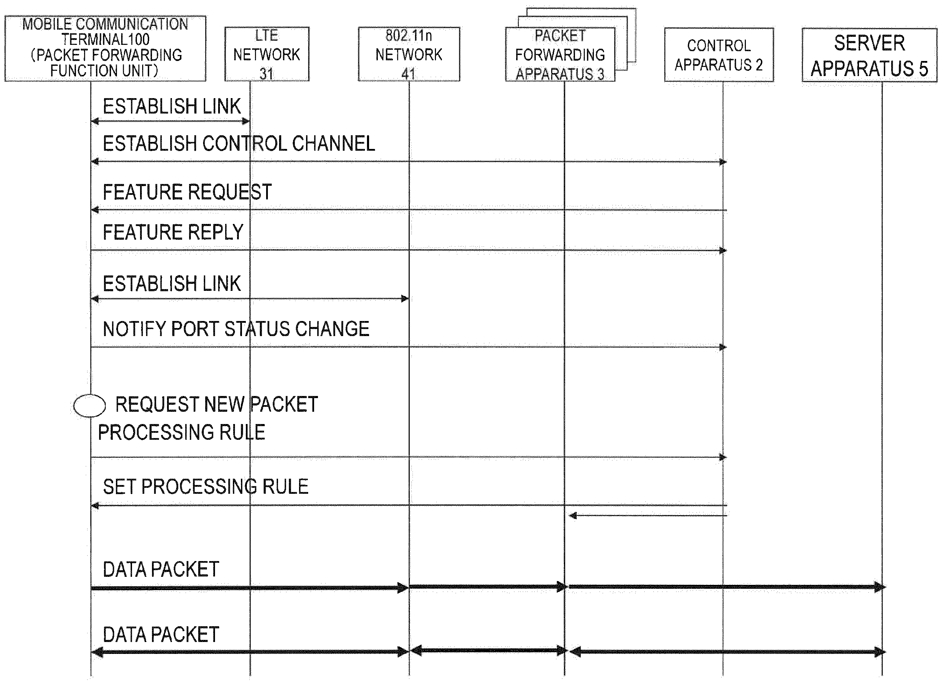

FIG. 14 is a sequence diagram showing an example of an operation of the communication system according to the present exemplary embodiment. Referring to FIG. 14, a description is given of the operation of the communication system of the present exemplary embodiment. It is to be noted that the operation shown in FIG. 14 are exemplary, and operations of the present invention are not limited to the operation shown in FIG. 14.

The mobile communication terminal 100, for example, establishes a link with the LTE network 31, among the RANs for 3GPP access.

The mobile communication terminal 100 establishes a control channel with the control apparatus 2, via the link established with the LTE network 31. The control apparatus 2 transmits a feature request to the mobile communication terminal 100, via the control channel.

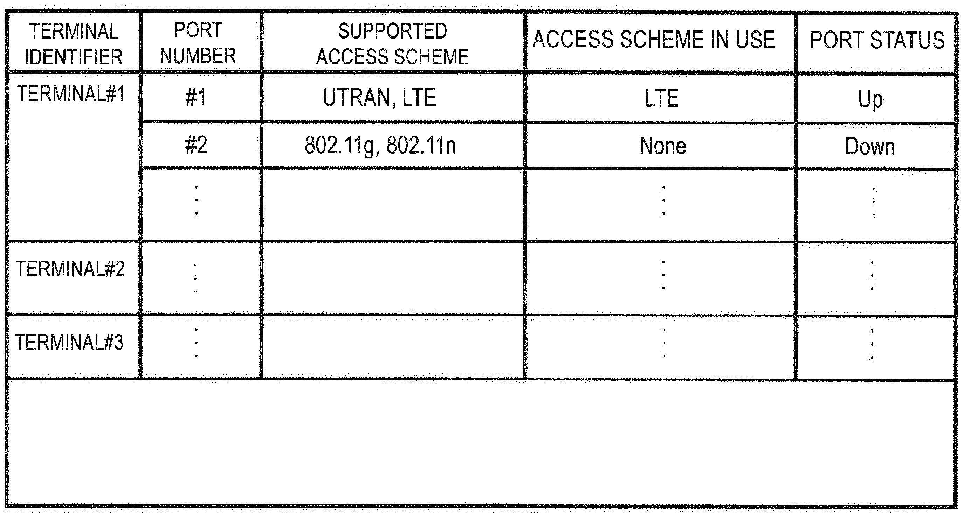

The mobile communication terminal 100, for example, responds with a feature reply to the feature request, by associating the supported access scheme or presently used access scheme, port status, or the like, to a corresponding port unit 104. In this case, a table managed by the terminal information management unit 27 of the control apparatus 2, as information of the mobile communication terminal 100, is shown in FIG. 15. Since the mobile communication terminal 100 establishes a link with the LTE network 31, among the RANs for 3GPP access, the access scheme in use by port number #1 is LTE and the port status is Up. On the other hand, since the mobile communication terminal 100 does not establish a link with any of the WLAN RANs, there is no access scheme in use by port number #2 and the port status is Down.

Thereafter, the mobile communication terminal 100 establishes a link with the 802.11n network 41 that is a WLAN network supporting 802.11n.

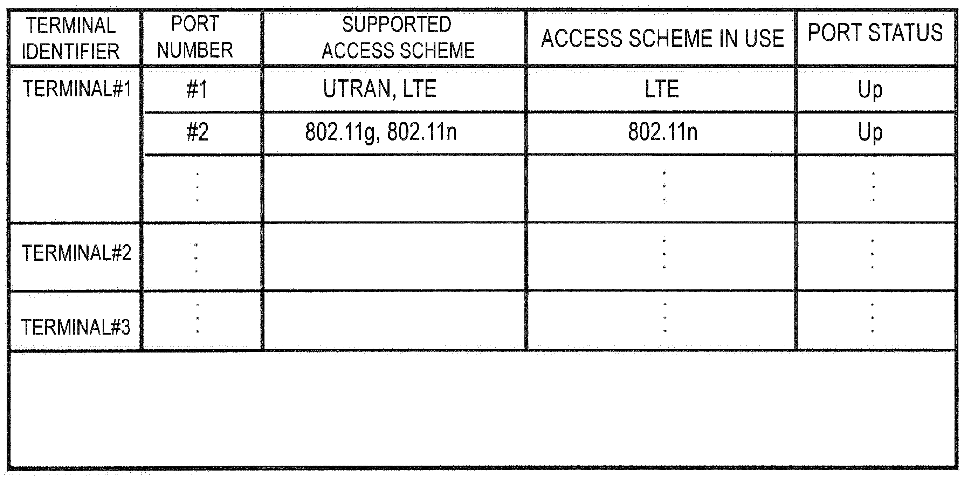

The mobile communication terminal 100 gives notification that port status has changed to the control apparatus 2. According to the notification of change of port status, the mobile communication terminal 100 associates the access scheme presently being used (802.11n) with a corresponding port unit 104, and gives notification to the control apparatus 2. In this case, a table managed by the terminal information management unit 27 of the control apparatus 2 as information of the mobile communication terminal 100 is shown in FIG. 16. Since the mobile communication terminal 100 establishes a link with the 802.11n network 41, the access scheme being used by port number #2 is changed to 802.11n and the port status is changed to Up.

In the present exemplary embodiment, when the mobile communication terminal 100 has established a new link, a notification that the port status has changed is given to the control apparatus 2, and also when the link is cut or when a handover occurs to a different access scheme, such as a handover from the UTRAN network 30 to the LTE network 31, for example, the mobile communication terminal 100 gives notification that the port status has changed to the control apparatus 2.

The packet forwarding function unit 103 of the mobile communication terminal 100, for example, receives a packet from an application. In a case where no processing rule corresponding to the packet in question exists (that is, when a new packet is received) the packet forwarding function unit 103 requests a processing rule with respect to the control apparatus 2. It is to be noted that in the example of FIG. 14, the new packet is a packet for communicating with the server apparatus 5.

The control apparatus 2, for example, gives consideration to the access scheme presently being used by the mobile communication terminal 100, and determines a processing rule to be transmitted to the mobile communication terminal 100. The control apparatus 2 transmits the determined processing rule to the mobile communication terminal 100. The control apparatus 2 determines a forwarding path for the mobile communication terminal 100 to communicate with the server apparatus 5, and transmits a processing rule corresponding to the determined path to the packet forwarding apparatus 3.

In accordance with the received processing rule, the mobile communication terminal 100 communicates with the server apparatus 5 via the packet forwarding apparatus 3.

### (Third Exemplary Embodiment)

A description is given concerning a communication system related to a third exemplary embodiment.

In the first and second exemplary embodiments, a description was given of examples in which the mobile communication terminal 100 gave notification to the control apparatus 2 of an access scheme supported by a communication interface or an access scheme in use by a communication interface, as a response to a feature request from the control apparatus 2 or notification of change of port status.

In the present exemplary embodiment, when a request is made to set a processing rule with respect to the control apparatus 2, the mobile communication terminal 100 gives notification of the access scheme of the communication interface or the access scheme in use by the communication interface. In a case of receiving a new packet for which a corresponding processing rule does not exist, for example, a packet forwarding function unit of the mobile communication terminal 100 includes in the packet an access scheme of the communication interface or an access scheme in use by the communication interface, and transmits to the control apparatus 2.

In a case of receiving a packet including the access scheme of the communication interface or the access scheme in use by the communication interface from the mobile communication terminal 100, for example, the control apparatus 2 gives consideration to the supported access scheme or the access scheme in use, to generate a processing rule. The mobile communication terminal 100, for example, may give notification of, in addition to the access scheme, information of an operator managing the access network, a cell ID of a wireless base station to which the mobile communication terminal 100 is connected, an SSID, which is an identifier of a WLAN access point, or the like.

According to the third exemplary embodiment, the mobile communication terminal 100 can give notification to the control apparatus 2 of an access scheme during execution of communication. The control apparatus 2 can obtain on a timely basis an access scheme in use that changes during execution of communication, and accompanying information (for example, information of an operator managing the access network, a cell ID of a wireless base station to which the mobile communication terminal 100 is connected, an SSID, which is an identifier of a WLAN access point, or the like). In this case, the control apparatus 2 can control the mobile communication terminal 100 with higher accuracy.

Descriptions have been given above of various exemplary embodiments of the present disclosure, but the present invention is not limited to the abovementioned exemplary embodiments, and further modifications, substitutions and adjustments may be added.

### REFERENCE LIST

- 1: mobile communication terminal
- 2: control apparatus
- 3: packet forwarding apparatus
- 4: network
- 5: server apparatus
- 6: LTE network
- 7: 802.11g network
- 10: communication interface
- 11: processing unit
- 12: control unit
- 13: packet forwarding function unit
- 20: node communication unit
- 21: control message processing unit
- 22: calculation unit
- 23: DB management unit
- 24: topology management unit
- 25: location management unit
- 26: processing rule DB
- 27: terminal information management unit
- 28: access network selection policy DB
- 30: UTRAN network.
- 31: LTE network
- 40: 802.11g network
- 41: 802.11n network
- 100: mobile communication terminal
- 101: application unit
- 102: protocol stack unit
- 103: packet forwarding function unit
- 104: port
- 105: communication interface
- 130: control unit
- 131: processing unit
- 132: access management unit
- 133: access management DB
- 134: processing rule management unit
- 135: processing rule DB
- 136: search unit
- 137: action execution unit

## Claims

1. A mobile communication terminal (1) arranged to communicate with a network (4) including a control apparatus (2) and a plurality of packet forwarding apparatuses (3) wherein the control apparatus (2) is arranged to centrally control packet forwarding performed by the plurality of packet forwarding apparatuses, the mobile communication terminal comprising:
a plurality of communication interfaces (10, 105) for wireless communication, each of the communication interfaces corresponding to one of a plurality of radio access networks through which the mobile communication terminal communicates with the network (4);
a packet forwarding unit (13) comprising a control means (12) and a processing means (11) configured to:
transmit to the control apparatus (2) interface information that is information related to characteristics or status of the plurality of communication interfaces (10)
when no processing rule corresponding to a packet to be processed exists, transmit to the control apparatus (2) a request for a processing rule for said packet, and receive, from the control apparatus (2), a processing rule, wherein the processing rule includes an instruction indicating the communication interface (10) the mobile communication terminal (1) should forward the packet to; and
forward the packet to the communication interface (10) in accordance with the instruction from the control apparatus (2).

2. The mobile communication terminal (1) according to claim 1, wherein the control means (12) is configured to transmit the interface information via a communication channel established between the mobile communication terminal and the control apparatus (2).

3. The mobile communication terminal (1) according to claim 1, wherein the control means (12) is configured to respond with the interface information in response to a request for characteristic information of the processing means (11) transmitted by the control apparatus (2).

4. The mobile communication terminal (1) according to claim 1, wherein the control means (12) includes the interface information in a transmission packet to the network (4).

5. The mobile communication terminal (100) according to claim 1, wherein
the processing means (131) is configured to forward the packet to one of the plurality of communication interfaces (105) associated with at least one of a plurality of ports (104), in accordance with the instruction from the control apparatus (2), and the control means (130) is configured to transmit to the control apparatus (2) information related to the one of the communication interfaces (105) associated with at least one of the plurality of ports.

6. The mobile communication terminal (1) according to claim 1, wherein the interface information includes information related to an access scheme that is useable when the mobile communication terminal communicates with the network (4).

7. The mobile communication terminal (1) according to claim 1, wherein the interface information includes information related to an access scheme that is being used when the mobile communication terminal communicates with the network (4).

8. A communication method by a mobile communication terminal (1) that communicates with a network (4) including a control apparatus (2) and a pluarailty of packet forwarding apparatuses (3) wherein the control apparatus (2) centrally controls packet forwarding performed by the plurality of packet forwarding apparatuses, the mobile communication terminal including a plurality of communication interfaces (10,105) for wireless communication, each of the communication interfaces corresponding to one of a plurality of radio access networks through which the mobile communication terminal communicates with the network (4), the method comprising:
transmitting to the control apparatus (2) interface information that is information related to the plurality of communication interfaces (10)
when no processing rule corresponding to a packet to be processed exists, transmitting to the control apparatus (2) a request for a processing rule for said packet, and
receiving, from the control apparatus (2), a processing rule, wherein the processing rule includes an instruction indicating the communication interface (10) the mobile communication terminal (1) should forward the packet to; and
forwarding the packet to the communication interface (10) in accordance with the instruction from the control apparatus (2).

9. The communication method according to claim 8, wherein the mobile communication terminal (1) transmits the interface information via a communication channel established between the mobile communication terminal and the control apparatus (2).

10. The communication method according to claim 8, wherein the mobile communication terminal (1) responds with the interface information in response to request for characteristic information of the processing means (11) transmitted by the control apparatus (2).

11. The communication method according to claim 8, wherein the mobile communication terminal (1) includes the interface information in a transmission packet to the network (4).

12. The communication method according to claim 8, wherein
the mobile communication terminal (100) forwards the packet to one of the plurality of communication interfaces (105) associated with at least one of a plurality of ports (104), in accordance with the instruction from the control apparatus (2), and the mobile communication terminal transmits to the control apparatus (2) information related to the one of the communication interfaces (105) associated with at least one of the plurality of ports.

13. The communication method according to claim 9, wherein the interface information includes information related to an access scheme that is useable when the mobile communication terminal (1) communicates with the network (4).

14. The communication method according to claim 9, wherein the interface information includes information related to an access scheme that is being used when the mobile communication terminal (1) communicates with the network (4).

15. A communication system comprising:
a control apparatus (2) arranged to centrally control packet forwarding performed by a plurality of packet forwarding apparatuses; and
a mobile communication terminal (1) arranged to communicate with a network (4) including the control apparatus (2) and the plurality of packet forwarding apparatuses (3), wherein
the mobile communication terminal (1) comprises:
a plurality of communication interfaces (10, 105) for wireless communication, each of the communication interfaces corresponding to one of a plurality of radio access networks through which the mobile communication terminal communicates with the network (4);
a packet forwarding unit (13, 103) configured to:
transmit to the control means (12) interface information that is information related to characteristics or status of the plurality of communication interfaces (10),
when no processing rule corresponding to a packet to be processed exists, transmit to the control apparatus (2) a request for a processing rule for said packet, and
receive, from the control apparatus (2), a processing rule, wherein the processing rule includes an instruction indicating the communication interface (10) the terminal should forward the packet to,
forward the packet to the comunication interface (10) in accordance with the instruction from the control apparatus (2).

16. A control apparatus (2) arranged to centrally control packet forwarding performed by a plurality of packet forwarding apparatuses, wherein the control apparatus (2) and the plurality of packet forwarding apparatuses are included in a network (4), the control apparatus (2) comprising:
means for receiving, from a mobile communication terminal (1), information related to characteristics or status of a plurality of communication interfaces (10) of the mobile communication terminal (1), wherein the said communication interfaces (10) are for wireless communication and each corresponds to one of a plurality of radio access networks through which the mobile communication terminal (1) communicates with the control apparatus (2),
said means are further configured to receive, from the mobile communication terminal (1), a request for a processing rule for a packet for which no processing rule exists at the said mobile communication terminal (1), and
means for transmitting, to the mobile communication terminal (1), a processing rule including an instruction for packet forwarding, indicating the communication interface (10) the mobile communication terminal (1) should forward the packet to,
wherein the processing rule is determined based on the received interface information.

17. A program downloadable to a mobile communication terminal to cause it to execute, when implemented on the mobile communication terminal, all the steps of the method of any of claims 8 to 14.

## Patentansprüche

1. Zur Kommunikation mit einem Netzwerk (4) angeordnetes Mobilkommunikationsendgerät (1), das eine Steuervorrichtung (2) und eine Vielzahl von Paketweiterleitungsvorrichtungen (3) enthält, wobei die Steuervorrichtung (2) zum zentralen Steuern der Paketweiterleitung, die von der Vielzahl von Paketweiterleitungsvorrichtungen durchgeführt wird, angeordnet ist, wobei das Mobilkommunikationsendgerät Folgendes aufweist:
eine Vielzahl von Kommunikationsschnittstellen (10, 105) für die drahtlose Kommunikation, wobei die Kommunikationsschnittstellen jeweils einem von einer Vielzahl von Funkzugangsnetzen entsprechen, durch die das Mobilkommunikationsendgerät mit dem Netzwerk (4) kommuniziert;
eine Paketweiterleitungseinheit (13), die ein Steuerungsmittel (12) und ein Verarbeitungsmittel (11) aufweist, die konfiguriert sind zum:
Übertragen von Schnittstelleninformationen an die Steuervorrichtung (2), die mit Eigenschaften oder Status der Vielzahl von Kommunikationsschnittstellen (10) in Beziehung stehende Informationen sind;
wenn keine einem zu verarbeitenden Paket entsprechende Verarbeitungsregel vorhanden ist, Übertragen einer Anfrage nach einer Verarbeitungsregel für das genannte Paket an die Steuervorrichtung (2) und Empfangen einer Verarbeitungsregel von der Steuervorrichtung (2), wobei die Verarbeitungsregel eine Anweisung enthält, die die Kommunikationsschnittstelle (10) angibt, an die das Mobilkommunikationsendgerät (1) das Paket weiterleiten sollte; und
Weiterleiten des Pakets an die Kommunikationsschnittstelle (10) gemäß der Anweisung von der Steuervorrichtung (2).

2. Mobilkommunikationsendgerät (1) nach Anspruch 1, wobei das Steuerungsmittel (12) zum Übertragen der Schnittstelleninformationen über einen Kommunikationskanal, der zwischen dem Mobilkommunikationsendgerät und der Steuervorrichtung (2) eingerichtet ist, konfiguriert ist.

3. Mobilkommunikationsendgerät (1) nach Anspruch 1, wobei das Steuerungsmittel (12) konfiguriert ist, um mit den Schnittstelleninformationen als Antwort auf eine Anfrage nach kennzeichnenden Informationen des Verarbeitungsmittels (11), die durch die Steuervorrichtung (2) übertragen werden, zu antworten.

4. Mobilkommunikationsendgerät (1) nach Anspruch 1, wobei das Steuerungsmittel (12) die Schnittstelleninformationen in ein Übertragungspaket an das Netzwerk (4) einfügt.

5. Mobilkommunikationsendgerät (100) nach Anspruch 1, wobei das Verarbeitungsmittel (131) zum Weiterleiten des Pakets zu einer von der Vielzahl von Kommunikationsschnittstellen (105), die wenigstens einem von einer Vielzahl von Ports (104) zugeordnet ist, gemäß der Anweisung von der Steuervorrichtung (2) konfiguriert ist und
das Steuerungsmittel (130) zum Übertragen von Informationen an die Steuervorrichtung (2) konfiguriert ist, die mit der einen der Kommunikationsschnittstellen (105) in Beziehung stehen, die dem wenigstens einen von der Vielzahl von Ports der Steuervorrichtung (2) zugeordnet ist.

6. Mobilkommunikationsendgerät (1) nach Anspruch 1, wobei die Schnittstelleninformationen Informationen enthalten, die mit einem Zugangsschema in Beziehung stehen, das benutzbar ist, wenn das Mobilkommunikationsendgerät mit dem Netzwerk (4) kommuniziert.

7. Mobilkommunikationsendgerät (1) nach Anspruch 1, wobei die Schnittstelleninformationen Informationen enthalten, die mit einem Zugangsschema in Beziehung stehen, das benutzt wird, wenn das Mobilkommunikationsendgerät mit dem Netzwerk (4) kommuniziert.

8. Kommunikationsverfahren durch ein mit einem Netzwerk (4) kommunizierendes Mobilkommunikationsendgerät (1), das eine Steuervorrichtung (2) und eine Vielzahl von Paketweiterleitungsvorrichtungen (3) enthält, wobei die Steuervorrichtung (2) die Paketweiterleitung, die von der Vielzahl von Paketweiterleitungsvorrichtungen durchgeführt wird, zentral steuert, wobei das Mobilkommunikationsendgerät eine Vielzahl von Kommunikationsschnittstellen (10, 105) für die drahtlose Kommunikation aufweist, wobei die Kommunikationsschnittstellen jeweils einem von einer Vielzahl von Funkzugangsnetzen entsprechen, durch die das Mobilkommunikationsendgerät mit dem Netzwerk (4) kommuniziert; wobei das Verfahren Folgendes aufweist:
Übertragen von Schnittstelleninformationen an die Steuervorrichtung (2), die mit der Vielzahl von Kommunikationsschnittstellen (10) in Beziehung stehende Informationen sind;
wenn keine einem zu verarbeitenden Paket entsprechende Verarbeitungsregel vorhanden ist, Übertragen einer Anfrage nach einer Verarbeitungsregel für das genannte Paket an die Steuervorrichtung (2) und
Empfangen einer Verarbeitungsregel von der Steuervorrichtung (2), wobei die Verarbeitungsregel eine Anweisung enthält, die die Kommunikationsschnittstelle (10) angibt, an die das Mobilkommunikationsendgerät (1) das Paket weiterleiten sollte; und
Weiterleiten des Pakets an die Kommunikationsschnittstelle (10) gemäß der Anweisung von der Steuervorrichtung (2).

9. Kommunikationsverfahren nach Anspruch 8, wobei das Mobilkommunikationsendgerät (1) die Schnittstelleninformationen über einen Kommunikationskanal überträgt, der zwischen dem Mobilkommunikationsendgerät und der Steuervorrichtung (2) eingerichtet ist.

10. Kommunikationsverfahren nach Anspruch 8, wobei das Mobilkommunikationsendgerät (1) mit den Schnittstelleninformationen als Antwort auf eine Anfrage nach kennzeichnenden Informationen des Verarbeitungsmittels (11), die durch die Steuervorrichtung (2) übertragen werden, antwortet.

11. Kommunikationsverfahren nach Anspruch 8, wobei das Mobilkommunikationsendgerät (1) die Schnittstelleninformationen in ein Übertragungspaket an das Netzwerk (4) einfügt.

12. Kommunikationsverfahren nach Anspruch 8, wobei das Mobilkommunikationsendgerät (100) das Paket zu einer von der Vielzahl von Kommunikationsschnittstellen (105), die wenigstens einem von einer Vielzahl von Ports (104) zugeordnet ist, gemäß der Anweisung von der Steuervorrichtung (2) weiterleitet und
das Mobilkommunikationsendgerät Informationen an die Steuervorrichtung (2) überträgt, die mit der einen der Kommunikationsschnittstellen (105) in Beziehung stehen, die wenigstens einem der Vielzahl von Ports zugeordnet ist.

13. Kommunikationsverfahren nach Anspruch 9, wobei die Schnittstelleninformationen Informationen enthalten, die mit einem Zugangsschema in Beziehung stehen, das benutzbar ist, wenn das Mobilkommunikationsendgerät mit dem Netzwerk (4) kommuniziert.

14. Kommunikationsverfahren nach Anspruch 9, wobei die Schnittstelleninformationen Informationen enthalten, die mit einem Zugangsschema in Beziehung stehen, das benutzt wird, wenn das Mobilkommunikationsendgerät mit dem Netzwerk (4) kommuniziert.

15. Kommunikationssystem, das Folgendes aufweist:
eine Steuervorrichtung (2), die zum zentralen Steuern der Paketweiterleitung, die von einer Vielzahl von Paketweiterleitungsvorrichtungen durchgeführt wird, angeordnet ist; und
ein zur Kommunikation mit einem Netzwerk (4) angeordnetes Mobilkommunikationsendgerät (1), das die Steuervorrichtung (2) und die Vielzahl von Paketweiterleitungsvorrichtungen (3) enthält, wobei das Mobilkommunikationsendgerät (1) Folgendes aufweist:
eine Vielzahl von Kommunikationsschnittstellen (10, 105) für die drahtlose Kommunikation, wobei die Kommunikationsschnittstellen jeweils einem von einer Vielzahl von Funkzugangsnetzen entsprechen, durch die das Mobilkommunikationsendgerät mit dem Netzwerk (4) kommuniziert;
eine Paketweiterleitungseinheit (13, 103), die konfiguriert ist zum:
Übertragen von Schnittstelleninformationen an die Steuervorrichtung (2), die mit Eigenschaften oder Status der Vielzahl von Kommunikationsschnittstellen (10) in Beziehung stehende Informationen sind;
wenn keine einem zu verarbeitenden Paket entsprechende Verarbeitungsregel vorhanden ist, Übertragen einer Anfrage nach einer Verarbeitungsregel für das genannte Paket an die Steuervorrichtung (2) und Empfangen einer Verarbeitungsregel von der Steuervorrichtung (2), wobei die Verarbeitungsregel eine Anweisung enthält, die die Kommunikationsschnittstelle (10) angibt, an die das Mobilkommunikationsendgerät (1) das Paket weiterleiten sollte;
Weiterleiten des Pakets an die Kommunikationsschnittstelle (10) gemäß der Anweisung von der Steuervorrichtung (2).

16. Steuervorrichtung (2), die zum zentralen Steuern der Paketweiterleitung, die von einer Vielzahl von Paketweiterleitungsvorrichtungen durchgeführt wird, angeordnet ist, wobei die Steuervorrichtung (2) und die Vielzahl von Paketweiterleitungsvorrichtungen in einem Netzwerk (4) enthalten sind, wobei die Steuervorrichtung (2) Folgendes aufweist:
ein Mittel zum Empfangen von mit Eigenschaften oder Status einer Vielzahl von Kommunikationsschnittstellen (10) des Mobilkommunikationsendgeräts (1) in Beziehung stehenden Informationen von einem Mobilkommunikationsendgerät (1), wobei die genannten Kommunikationsschnittstellen (10) für die drahtlose Kommunikation sind und jeweils einem von einer Vielzahl von Funkzugangsnetzen entsprechen, durch die das Mobilkommunikationsendgerät mit der Steuervorrichtung (2) kommuniziert;
wobei die genannten Mittel ferner zum Empfangen einer Anfrage nach einer Verarbeitungsregel für ein Paket, für das an dem genannten Mobilkommunikationsendgerät (1) keine Verarbeitungsregel besteht, von dem Mobilkommunikationsendgerät (1) konfiguriert sind, und
ein Mittel zum Übertragen einer Verarbeitungsregel an das Mobilkommunikationsendgerät (1) mit einer Anweisung zur Paketweiterleitung, die die Kommunikationsschnittstelle (10) angibt, an die das Mobilkommunikationsendgerät (1) das Paket weiterleiten sollte;
wobei die Verarbeitungsregel auf Basis der empfangenen Schnittstelleninformationen bestimmt wird.

17. Zu einem Mobilkommunikationsendgerät herunterladbares Programm zum Veranlassen desselben zum Ausführen, bei Implementierung am Mobilkommunikationsendgerät, von allen Schritten des Verfahrens nach einem der Ansprüche 8 bis 14.

## Revendications

1. Terminal de communication mobile (1) agencé pour communiquer avec un réseau (4) comportant un appareil de commande (2) et une pluralité d'appareils d'acheminement de paquets (3) dans lequel l'appareil de commande (2) est agencé pour commander centralement un acheminement de paquets réalisé par la pluralité d'appareils d'acheminement de paquets, le terminal de communication mobile comprenant :
une pluralité d'interfaces de communication (10, 105) pour des communications en mode sans fil, chacune des interfaces de communication correspondant à un d'une pluralité de réseaux d'accès radio par le biais desquels le terminal de communication mobile communique avec le réseau (4) ;
une unité d'acheminement de paquets (13) comprenant un moyen de commande (12) et un moyen de traitement (11) configurée pour :
transmettre à l'appareil de commande (2) des informations d'interface qui sont des informations relatives à des caractéristiques ou un statut de la pluralité d'interfaces de communication (10)
quand il n'existe aucune règle de traitement correspondant à un paquet à traiter, transmettre à l'appareil de commande (2) une demande d'une règle de traitement pour ledit paquet, et
recevoir, depuis l'appareil de commande (2), une règle de traitement, la règle de traitement comportant une instruction indiquant l'interface de communication (10) jusqu'à laquelle le terminal de communication mobile (1) doit acheminer le paquet ; et
acheminer le paquet à l'interface de communication (10) conformément à l'instruction donnée par l'appareil de commande (2).

2. Terminal de communication mobile (1) selon la revendication 1, dans lequel le moyen de commande (12) est configuré pour transmettre les informations d'interface par l'intermédiaire d'un canal de communication établi entre le terminal de communication mobile et l'appareil de commande (2).

3. Terminal de communication mobile (1) selon la revendication 1, dans lequel le moyen de commande (12) est configuré pour répondre avec les informations d'interface en réponse à une demande d'informations de caractéristiques du moyen de traitement (11) transmise par l'appareil de commande (2).

4. Terminal de communication mobile (1) selon la revendication 1, dans lequel le moyen de commande (12) inclut les informations d'interface dans un paquet de transmission destiné au réseau (4).

5. Terminal de communication mobile (100) selon la revendication 1, dans lequel
le moyen de traitement (131) est configuré pour acheminer le paquet jusqu'à une de la pluralité d'interfaces de communication (105) associée à au moins un d'une pluralité de ports (104), conformément à l'instruction donnée par l'appareil de commande (2), et
le moyen de commande (130) est configuré pour transmettre à l'appareil de commande (2) des informations relatives à une des interfaces de communication (105) associée à au moins un de la pluralité de ports.

6. Terminal de communication mobile (1) selon la revendication 1, dans lequel les informations d'interface comportent des informations relatives à un plan d'accès qui peut être utilisé quand le terminal de communication mobile communique avec le réseau (4).

7. Terminal de communication mobile (1) selon la revendication 1, dans lequel les informations d'interface comportent des informations relatives à un plan d'accès qui est utilisé quand le terminal de communication mobile communique avec le réseau (4).

8. Procédé de communication par un terminal de communication mobile (1) qui communique avec un réseau (4) comportant un appareil de commande (2) et une pluralité d'appareils d'acheminement de paquets (3) dans lequel l'appareil de commande (2) commande centralement l'acheminement de paquets réalisé par la pluralité d'appareils d'acheminement de paquets, le terminal de communication mobile comportant une pluralité d'interfaces de communication (10,105) pour des communications en mode sans fil, chacune des interfaces de communication correspondant à un d'une pluralité de réseaux d'accès radio par le biais desquels le terminal de communication mobile communique avec le réseau (4), le procédé comprenant :
la transmission à l'appareil de commande (2) d'informations d'interface qui sont des informations relatives à la pluralité d'interfaces de communication (10)
quand il n'existe aucune règle de traitement correspondant à un paquet à traiter, la transmission à l'appareil de commande (2) d'une demande d'une règle de traitement pour ledit paquet, et
la réception, depuis l'appareil de commande (2), d'une règle de traitement, la règle de traitement comportant une instruction indiquant l'interface de communication (10) jusqu'à laquelle le terminal de communication mobile (1) doit acheminer le paquet ; et
l'acheminement du paquet jusqu'à l'interface de communication (10) conformément à l'instruction donnée par l'appareil de commande (2).

9. Procédé de communication selon la revendication 8, dans lequel le terminal de communication mobile (1) transmet les informations d'interface par l'intermédiaire d'un canal de communication établi entre le terminal de communication mobile et l'appareil de commande (2).

10. Procédé de communication selon la revendication 8, dans lequel le terminal de communication mobile (1) répond avec les informations d'interfaces en réponse à la demande d'informations de caractéristiques du moyen de traitement (11) transmise par l'appareil de commande (2).

11. Procédé de communication selon la revendication 8, dans lequel le terminal de communication mobile (1) inclut les informations d'interface dans un paquet de transmission destiné au réseau (4).

12. Procédé de communication selon la revendication 8, dans lequel
le terminal de communication mobile (100) achemine le paquet jusqu'à une de pluralité d'interfaces de communication (105) associée à au moins un d'une pluralité de ports (104), conformément à l'instruction donnée par l'appareil de commande (2), et
le terminal de communication mobile transmet à l'appareil de commande (2) des informations relatives à la une des interfaces de communication (105) associée à au moins un de la pluralité de ports.

13. Procédé de communication selon la revendication 9, dans lequel les informations d'interface comportent des informations relatives à un plan d'accès qui peut être utilisé quand le terminal de communication mobile (1) communique avec le réseau (4).

14. Procédé de communication selon la revendication 9, dans lequel les informations d'interface comportent des informations relatives à un plan d'accès utilisé quand le terminal de communication mobile (1) communique avec le réseau (4).

15. Système de communication comprenant :
un appareil de commande (2) agencé pour commander centralement un acheminement de paquets réalisé par une pluralité d'appareils d'acheminement de paquets ; et
un terminal de communication mobile (1) agencé pour communiquer avec un réseau (4) comportant l'appareil de commande (2) et la pluralité d'appareils d'acheminement de paquets (2), dans lequel
le terminal de communication mobile (1) comprend :
une pluralité d'interfaces de communication (10, 105) pour des communications en mode sans fil, chacune des interfaces de communication correspondant à un d'une pluralité de réseaux d'accès radio par le biais desquels le terminal de communication mobile communique avec le réseau (4) ;
une unité d'acheminement de paquets (13, 103) configurée pour :
transmettre au moyen de commande (12) des informations d'interface qui sont des informations relatives à des caractéristiques ou un statut de la pluralité d'interfaces de communication (10)
quand il n'existe aucune règle de traitement correspondant à un paquet à traiter, transmettre à l'appareil de commande (2) une demande d'une règle de traitement pour ledit paquet, et
recevoir, depuis l'appareil de commande (2), une règle de traitement, la règle de traitement comportant une instruction indiquant l'interface de communication (10) jusqu'à laquelle le terminal de communication mobile (1) doit acheminer le paquet ; et
acheminer le paquet jusqu'à l'interface de communication (10) conformément à l'instruction donnée par l'appareil de commande (2).

16. Appareil de commande (2) agencé pour commander centralement un acheminement de paquets réalisé par une pluralité d'appareils d'acheminement de paquets, l'appareil de commande (2) et la pluralité d'appareils d'acheminement de paquets étant inclus dans un réseau (4), l'appareil de commande (2) comprenant :
des moyens de réception, depuis un terminal de communication mobile (1), d'informations relatives à des caractéristiques ou un statut d'une pluralité d'interfaces de communication (10) du terminal de communication mobile (1), dans lequel lesdites interfaces de communication (10) sont destinées à des communications en mode sans fil et correspondent chacune à un d'une pluralité de réseaux d'accès radio par le biais desquels le terminal de communication mobile (1) communique avec l'appareil de commande (2),
lesdits moyens sont configurés en outre pour recevoir, depuis le terminal de communication mobile (1), une demande de règle de traitement pour un paquet pour lequel il n'existe aucune règle de traitement au niveau dudit terminal de communication mobile (1), et
un moyen de transmission, au terminal de communication mobile (1), d'une règle de traitement comportant une instruction d'acheminement de paquets, indiquant l'interface de communication (10) jusqu'à laquelle le terminal de communication mobile (1) doit acheminer le paquet,
dans lequel la règle de traitement est déterminée en fonction des informations d'interface reçues.

17. Programme téléchargeable dans un terminal de communication mobile pour l'amener à exécuter, lorsqu'il est mis en oeuvre sur le terminal de communication mobile, toutes les étapes du procédé selon l'une quelconque des revendications 8 to 14.
